# FASCICULE DE BREVET EUROPEEN

(11) **EP 2 078 412 B1**
(45) Date de publication et mention de la délivrance du brevet: **23.05.2012**
(21) Numéro de dépôt: 07858562.7
(22) Date de dépôt: 12.10.2007
(51) Int. Cl.: H04L 29/08, H04L 12/28, H04L 29/06, H04W 24/06, H04W 24/00, H04W 48/18

(54) **PROCÉDÉ D'ACCÈS À UN SERVICE, VIA UN RÉSEAU HÉTÉROGÈNE OÙ PLUSIEURS TYPES D'ACCÈS SONT DISPONIBLES, À PARTI R D'UN TERMINAL D'UN UTILISATEUR**
VERFAHREN FÜR DEN ZUGANG ZU EINEM DIENST VON EINEM BENUTZERENDGERÄT ÜBER EIN HETEROGENES NETZWERK MIT VERSCHIEDENEN VERFÜGBAREN ZUGANGSTYPEN
METHOD FOR ACCESSING A SERVICE FROM A USER'S TERMINAL THROUGH A HETEROGENEOUS NETWORK IN WHICH SEVERAL ACCESS TYPES ARE AVAILABLE

(30) Priorité: 13.10.2006 FR 0609015
(43) Date de publication de la demande: 15.07.2009
(73) Titulaire: FRANCE TELECOM, 75015 Paris (FR)
(72) Inventeur: BARANKANIRA, Delphin, F-94800 Villejuif (FR); PINATEL, Boris, F-75014 Paris (FR); TOSSOU, Bruno, F-91230 Montgeron (FR)
(74) Mandataire: Cabinet Plasseraud
(86) Numéro de dépôt international: PCT/FR2007/052132
(87) Numéro de publication internationale: WO 2008/043970

(56) Documents cités:
- EP-A- 1 708 526
- WO-A-2006/084776
- US-A1- 2004 218 605
- KALOXYLOS ET AL: "A flexible handover mechanism for seamless service continuity in heterogeneous environments" COMPUTER COMMUNICATIONS, ELSEVIER SCIENCE PUBLISHERS BV, AMSTERDAM, NL, vol. 29, no. 6, 31 mars 2006 (2006-03-31), pages 717-729, XP005333980 ISSN: 0140-3664

## Description

L'invention concerne un procédé d'accès à un service, via un réseau hétérogène où plusieurs types d'accès sont disponibles, à partir d'un terminal d'un utilisateur.

L'invention concerne plus particulièrement les réseaux hétérogènes, qui sont des réseaux multifoumisseurs utilisant des technologies d'accès différentes, utilisant le protocole IP (« Internet Protocol ») comme protocole de transport. Il s'agit notamment des réseaux hétérogènes où les accès disponibles sont des accès Wi-Fi (WLAN, 1-WLAN), WIMAX ainsi que des accès de génération 2 de type GSM (« Global System for Mobile Communications »), 2,5 de type GPRS (« General Packet Radio Service») ou 3 de type UMTS (« Universal Mobile Telecommunication System ») de téléphonie mobile, d'un ou de plusieurs opérateurs.

Ces dernières années, l'usage des terminaux mobiles s'est démocratisé, la consommation des services multimédia connaît une forte croissance et de nouvelles technologies sans fil sont apparues. Le besoin d'être connecté à tout moment, quelque soit le lieu et quel que soit le moyen utilisé a conduit au développement d'un nombre important de types d'accès hétérogènes, d'applications et de terminaux. Afin d'optimiser l'utilisation de ces différentes ressources, la tendance actuelle est la convergence des réseaux et des services. Dans cette situation, l'utilisateur doit toujours être connecté à un accès, quel qu'en soit le type, lui offrant le meilleur débit, tarifs, etc. Par conséquent des mécanismes de sélection d'accès doivent être optimisés et étendus.

Par ailleurs, les terminaux mobiles sont actuellement équipés de plusieurs interfaces réseaux, qui peuvent être de types différents, sans fil ou bien cellulaire. Les besoins des différentes applications peuvent amener à choisir une interface plutôt qu'une autre. La connexion doit alors s'établir via la meilleure interface en fonction des besoins en termes de débit, capacité, taux d'erreur etc. Après l'établissement d'une session, l'état de la communication peut amener à déplacer la communication existante sur une autre interface. Par conséquent il peut s'avérer judicieux de choisir les meilleures interfaces et accès à la connexion pour limiter les problèmes cités ci-dessus.

Actuellement, deux modes de sélection d'accès et d'attachement au réseau sont standardisés au 3GPP «3^{rd} Generation Partnership Project ». Il s'agit du mode manuel et du mode automatique. Dans le mode manuel, l'utilisateur choisit un accès sur lequel il veut se connecter en se basant sur des identifiants des accès disponibles. Ce mode n'est pas privilégié si on veut atteindre une mobilité transparente à l'utilisateur et lui offrir une facilité d'utilisation du service. Par exemple dans le mode manuel, la disponibilité des mêmes services, qualité de service et ressources, en cas de changement d'accès, n'est pas garantie.

Le mode automatique est privilégié par les opérateurs car il optimise l'utilisation des ressources et minimise le coût des reversements entre opérateurs. Ce mode rend l'utilisation du réseau conviviale car il nécessite peu (ou pas) d'intervention de l'utilisateur. Dans ce mode deux listes d'identifiants d'accès sont stockées ou bien fournies au terminal. Ce dernier essaye de se connecter successivement aux différents accès disponibles jusqu'à ce qu'il trouve l'accès fourni par son opérateur ou un accès d'un autre opérateur ayant des accords d'itinérance (« roaming »), avec son opérateur.

Des règles peuvent être implémentées pour le choix de l'accès. Les deux modes existants ne permettent pas une sélection optimale et intelligente de l'accès. Ceci induit beaucoup d'échanges entre le terminal et le réseau hétérogène et a pour conséquence de ralentir la connexion du terminal au réseau.

Une optimisation de ce mécanisme de sélection d'accès a été envisagée dans la demande internationale n° WO 2005/032082 déposé par SAMSUNG ELECTRONICS.

Ce document définit un procédé pour connecter le terminal sur l'un des différents accès dont les zones de couverture se chevauchent et qui sont accessibles en même temps par le terminal. Ce mécanisme utilise le principe de priorité préétablie. Le terminal parcourt la liste des identifiants d'accès accessibles à partir du premier en suivant l'ordre de priorité jusqu'à ce que la connexion au réseau soit accomplie.

Ainsi, dans l'état de la technique, seul le terminal a la possibilité de choisir l'accès et dans certains cas le réseau propose de nouvelles priorités parmi les accès sur la base de critères statiques. Ces mécanismes ne permettent pas de garantir que l'accès choisi peut offrir la qualité de service attendue par l'utilisateur pour accéder aux services voulus notamment en termes de bande passante.

Aussi, un utilisateur correctement authentifié peut voir sa demande d'accès à certains services refusée ou bien se voir déconnecté du réseau.

Le procédé du document cité ci-dessus, ne permet pas d'optimiser la connexion. En effet, bien que la liste d'accès soit ordonnée, après une connexion réussie, le terminal peut rencontrer des problèmes liés à la qualité de service.

Il existe donc un besoin de résoudre ce problème d'optimisation de la connexion.

Le document KALOXYLOS ET AL: "A flexible handover mechanism for seamless service continuity in heterogeneous environments" divulgue un procédé pour fournir une continuité de service de manière transparente pour un utilisateur passant d'un accès réseau à un autre comportant la sélection d'une connexion à partir d'une liste d'accès réseau et d'un état du trafic.

Le document WO2006/084776 divulgue un procédé d'adaptation d'une liaison entre un fournisseur de service et une station mobile comportant une pluralité d'interfaces d'accès sans-fil différentes, à un paramètre de service.

L'invention a pour objet un procédé d'accès à un service selon la revendication 1.

Ainsi, l'invention permet de pallier les inconvénients des méthodes de l'état de la technique en fournissant à l'utilisateur un accès lui offrant les meilleures conditions pour obtenir le service requis. En effet, l'étape de sélection d'accès comprend une étape de réservation de ressources auprès de l'accès sélectionné par le serveur de sélection d'accès. L'intérêt de cette réservation est de vérifier la disponibilité des ressources de bout en bout.

D'autres caractéristiques de l'invention sont énoncées dans la suite.

Selon un aspect de l'invention, l'étape d'envoi comprend en outre l'envoi d'un identifiant de réservation de ressources au terminal.

Cet identifiant est utilisé par le terminal lorsqu'il se connecte à l'accès sélectionné et lui permet d'obtenir les ressources réservées.

Selon un autre aspect de l'invention, l'étape de sélection comprend :
une étape de négociation de ressources avec un accès du réseau d'une liste d'identifiants d'accès visibles à partir du terminal;
en cas d'échec de la négociation avec ledit accès, elle effectue une négociation avec un autre accès de la liste; et
en cas d'échec de la négociation avec tous les accès de la liste, elle sélectionne l'accès conduisant au meilleur résultat de négociation.

Lorsque les négociations ont toutes échoué, le serveur de sélection d'accès propose l'accès offrant le meilleur compromis en se basant sur le résultat des négociations des ressources avec les accès de la liste.

L'étape de connexion du terminal au réseau comprend une étape de fourniture par le terminal :
- de paramètres d'authentification;
- d'une liste d'identifiants des accès visibles à partir du terminal ; et
- de critères de sélection et de classement des identifiants des accès visibles à partir du terminal.

La fourniture de paramètres d'authentification, la fourniture de la liste d'identifiants des accès visibles à partir du terminal et la fourniture des critères de sélection et de classement permettent d'améliorer l'optimisation de la connexion au service requis.

L'étape de sélection d'accès comprend une étape de classement de la liste des identifiants des accès fournis par le terminal sur la base des informations fournies par le terminal et d'informations dynamiques obtenues par apprentissage concernant des caractéristiques de requêtes d'accès précédentes fournies par une base de données locale.

Ceci permet d'obtenir une sélection rapide et pertinente de l'accès par le serveur.

L'étape de sélection d'accès comprend une étape de mise à jour des informations concernant les caractéristiques de requêtes d'accès précédentes dans la base de données locale.

Ceci permet d'avoir un mécanisme d'apprentissage pour éviter les situations d'échec répétitives ou reproduites pour le terminal.

Selon un autre aspect l'invention a également pour objet un système d'accès à un service dans un réseau hétérogène selon la revendication 5.

Selon une autre caractéristique :
les accès distincts sont des accès sans fil Wi-Fi, WIMAX ou des accès de génération 2 ou 2,5 ou 3 de téléphonie mobile d'un ou de plusieurs opérateurs.

Selon encore un autre aspect, l'invention a également pour objet un serveur de sélection d'accès selon la revendication 7.

Selon un aspect de l'invention, le serveur de sélection est caractérisé en ce que:
lesdit moyens de sélection comprennent des moyens de négociation de ressources auprès d'un accès du réseau appartenant à une liste d'identifiants d'accès visibles à partir du terminal;
en cas d'échec de la négociation avec ledit accès, lesdits moyens de négociation sont aptes à négocier avec un autre accès de la liste; et
en ce que, en cas d'échec de la négociation avec tous les accès de la liste, ils sont aptes à sélectionner l'accès conduisant au meilleur résultat de négociation.

Selon une autre caractéristique, il comprend des moyens de réception d'une liste d'identifiants d'accès et du service demandé par l'utilisateur; et de critères de sélection et de classement à partir du terminal d'utilisateur ;

Selon encore un autre aspect, l'invention a également pour objet un produit programme d'ordinateur, selon la revendication 9, téléchargeable depuis un réseau de communication et/ou stocké sur un support lisible par ordinateur et/ou exécutable par un microprocesseur d'un serveur de sélection d'accès, caractérisé en ce qu'il comprend des instructions de code de programme pour l'exécution du procédé selon l'invention. Selon un autre aspect, l'invention a également pour objet un programme d'ordinateur selon la revendication 10.

L'invention sera mieux comprise à la lecture de la description qui va suivre donnée uniquement à titre d'exemple et faite en se référant aux dessins annexés sur lesquels :
- la figure 1 est un schéma synoptique illustrant la structure d'un réseau hétérogène selon un mode de réalisation de la présente invention ;
- la figure 2 est un schéma synoptique illustrant la structure et le fonctionnement du procédé d'accès selon un mode de réalisation de l'invention ;
- la figure 3 est un schéma synoptique illustrant la structure et le fonctionnement de l'étape de sélection d'accès par le serveur de sélection d'accès, selon un mode de réalisation de l'invention ;
- la figure 4 est un organigramme illustrant le fonctionnement du procédé d'accès selon un mode de réalisation de l'invention ;
- la figure 5 est un organigramme illustrant le fonctionnement de l'étape de sélection d'accès par le serveur de sélection d'accès, selon un mode de réalisation de l'invention.

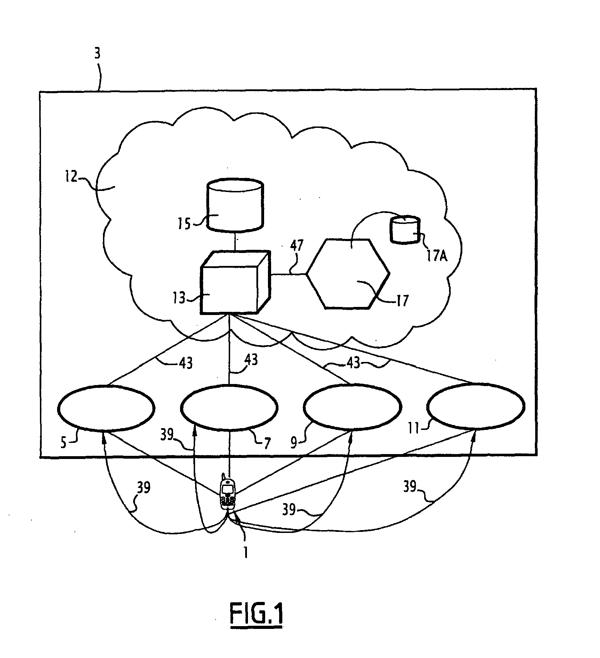

Sur la figure 1, est représenté un réseau hétérogène selon un mode de réalisation de l'invention.

Un terminal d'utilisateur 1 est propre à accéder à un service, dans un réseau hétérogène 3, représenté sur la figure 1. Ce réseau hétérogène 3 comprend plusieurs types d'accès disponibles. Ces accès sont, selon un mode de réalisation de l'invention :
- un accès à un réseau local sans fil WLAN (« Wireless Local Area Nefinrork ») 5 ;
- un accès à un réseau industriel sans fil 1-WLAN (« Industrial WLAN ») 7 ;
- un accès mobile de deuxième génération du type GSM ou de génération 2,5 de type GPRS 9 ;
- un accès mobile de troisième génération de type UMTS 11.

Selon un mode de réalisation de l'invention, le réseau hétérogène 3 possède une architecture définie par le 3GPP dans le cadre de la spécification des évolutions du réseau cellulaire basée sur l'IMS (« IP Multimedia Subsystem »). Le réseau 3 comprend un réseau domestique 12 propre à un opérateur. Les accès 5, 7, 9, 11 appartiennent à d'autres réseaux domestiques propres à d'autres opérateurs. Cette architecture sépare les accès 5, 7, 9 et 11 du réseau domestique 12 de l'opérateur offrant le service à l'utilisateur. Le réseau domestique 12 comprend un serveur d'authentification 13. Ce serveur d'authentification 13 est appelé serveur AAA (« Authentication Authorization Acounting ») dans l'architecture définie par le 3GPP.

Il permet aux opérateurs d'authentifier les utilisateurs dans le réseau, d'autoriser des services pour les utilisateurs et de contrôler l'utilisation des services.

Le réseau domestique 12 comprend également une base de données de profils des utilisateurs 15 comprenant les profils des abonnés de l'opérateur. Cette base de données contient des informations sur les abonnements et les caractéristiques des terminaux des abonnés.

Selon l'invention, le réseau domestique 12 comprend en outre un serveur de sélection d'accès 17 auquel est associée une base de données locale 17A.

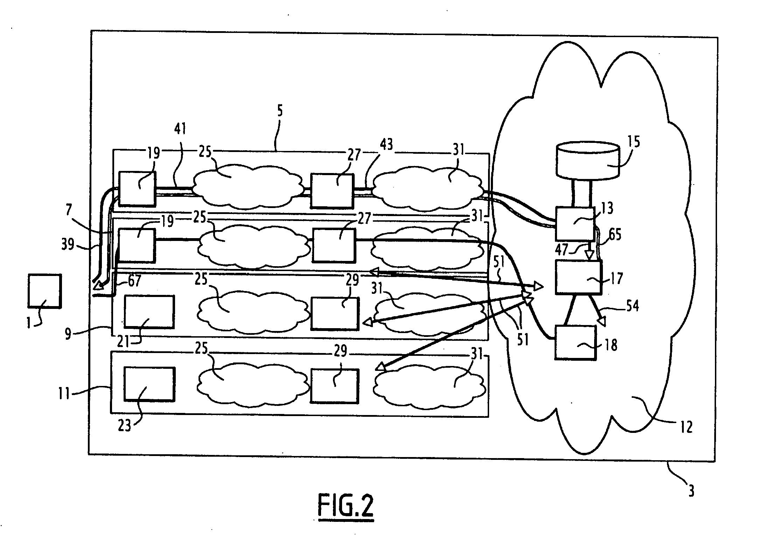

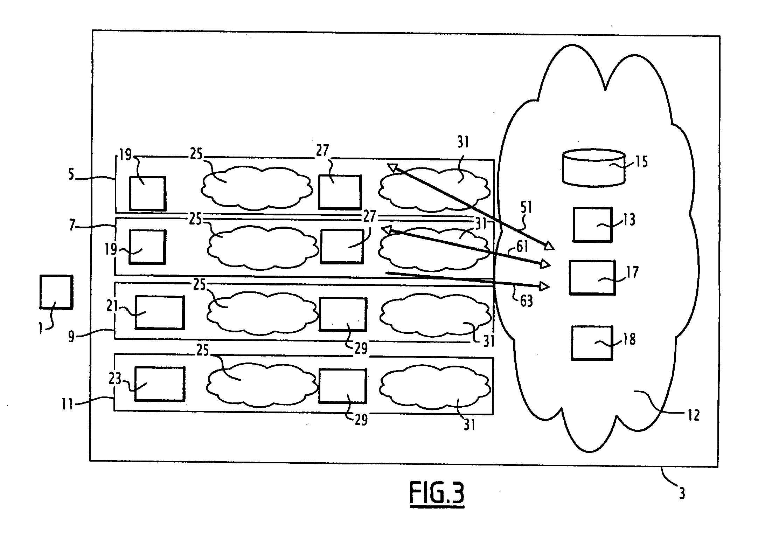

Selon un mode de réalisation de l'invention, le réseau domestique 12 comporte également une passerelle de données en paquets PDG (« Packet Data Gateway ») 18, représentée sur les figures 2 et 3.

La figure 2 illustre de manière détaillée la structure du système d'accès selon l'invention.

Les différents accès 5, 7, 9 et 11 disponibles sur le réseau hétérogène 3 sont munis de points d'accès qui permettent au terminal d'utilisateur 1 de s'y connecter.

Dans le cas des accès sans fil WLAN 5 et 1-WLAN 7, ces points d'accès sont des passerelles 19.

Dans le cas d'un accès GSM ou GPRS 9, ces points d'accès sont des stations de base 21.

Enfin, dans le cas d'un accès UMTS 11, ces points d'accès sont des stations de base appelées noeuds B 23.

De plus, les accès disponibles 5, 7, 9 et 11 comportent des routeurs d'accès 25 pour acheminer des données transmises depuis le terminal 1 vers une passerelle d'accès sans fil WAG (« Wireless Access Gateway ») 27 dans le cas d'un accès sans fil WLAN 5 et 1-WLAN 7 ou vers un noeud de support de service SGSN (« Serving GPRS Support Node ») 29 dans le cas d'un accès mobile 9 ou 11. La passerelle WAG 27 ou le noeud SGSN 29 constitue le point d'accès à un réseau de transport 31 de type IP, compris dans l'accès correspondant 5, 7, 9 ou 11 qui a pour rôle d'acheminer les données transmises depuis le terminal 1 vers le réseau domestique 12.

Le fonctionnement du procédé et système d'accès selon l'invention va maintenant être décrit en référence aux figures 1 à 5.

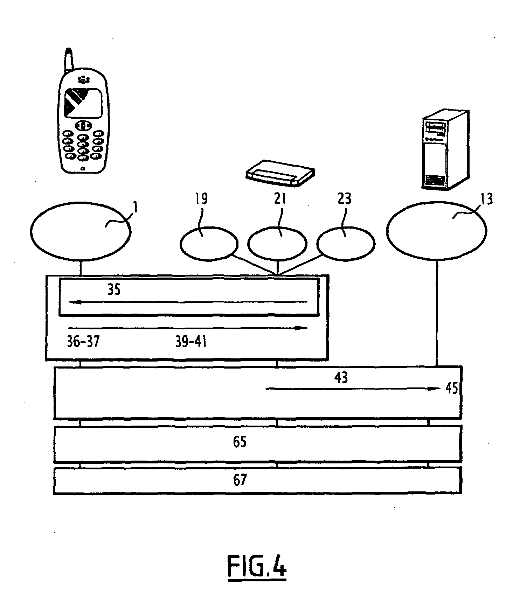

Selon l'invention, le terminal 1 obtient à sa demande en 35, comme illustré sur la figure 4, à partir de la passerelle 19 de la station de base 21 ou du noeud B 23 la liste des identifiants de tous les accès disponibles. Pour les accès sans fil de type WLAN 5 et 7, cet identifiant est l'identifiant SSID (« Service Set Identifier »). Pour les accès mobiles 9 et 11, cet identifiant est l'identifiant PLMN (« Public Land Mobile Network »).

Le terminal 1 trie en 36 les accès disponibles en fonction des préférences et habitudes de l'abonné. Selon un mode de réalisation de l'invention, le terminal 1 effectue ce classement hors ligne afin de prioriser et classer la liste des accès. Le terminal 1 possède ainsi, à tout instant, une liste classée comprenant les différents accès auxquels l'utilisateur s'est déjà connecté au moins une fois.

Lorsque l'utilisateur souhaite accéder à un service donné sur le réseau 3, le terminal 1 choisit en 37 l'un des accès disponibles dans sa liste et établit une connexion en 39. Cette connexion en 39 est effectuée à l'aide d'une requête d'accès vers la passerelle 19 dans le cas où l'accès choisi est un accès sans fil 5 ou 7 ou vers la station de base dans le cas où l'accès choisi est un accès mobile GSM ou GPRS 9 ou vers le noeud B dans le cas où l'accès choisi est un accès mobile UMTS 11. Cette requête est transmise en 41 à travers l'accès choisi vers la passerelle d'accès WAG 27 dans le cas d'un accès sans fil 5 ou 7 ou vers le noeud de support SGSN 29 dans le cas d'un accès mobile de deuxième ou troisième génération 9 ou 11. La requête en ensuite relayée en 43 à travers le réseau de transport de type IP 31 vers le serveur d'authentification 13.

Cette requête d'accès comprend les éléments suivants :
- des paramètres nécessaires pour l'authentification. Il s'agit par exemple des paramètres de protocoles d'authentification de type EAP-SIM (« Extensible Authentification Protocol - Subscriber Identify Module ») utilisé notamment lors d'un accès GSM ou de type EAP - AKA (« Extensible Authentification Protocol - Authentification and Key Agreement ») utilisé notamment lors d'un accès UMTS ;
- les identifiants et les informations dont le terminal 1 dispose sur les accès disponibles notamment concernant la bande passante ou la puissance du signal ;
- les critères de sélection et de classement qui sont par exemple des informations sur la bande passante requise pour le service souhaité et/ou la classe de service du service, ainsi que des informations sur les paramètres du terminal 1 comme la batterie ou la capacité d'affichage.

La requête d'accès étant reçue par le serveur d'authentification 13, ce dernier authentifie en 45, comme montré sur la figure 4, le terminal 1. Dans le cas d'une authentification réussie du terminal 1, le serveur d'authentification 13 envoie en 47, comme illustré sur la figure 2, la requête d'accès ainsi que le profil de l'utilisateur contenu dans la base de données 15 au serveur de sélection d'accès 17, comme montré sur les figures 1 et 2.

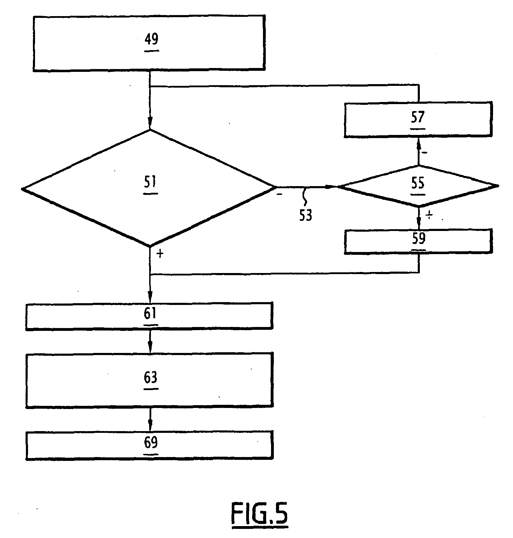

Le serveur de sélection d'accès 17 réordonne en 49 comme représenté sur la figure 5, la liste préclassée d'identifiants d'accès fournie par le terminal 1 en fonction des critères de classement remontés par le terminal 1 vers le serveur d'authentification 13 dans sa requête d'accès ainsi qu'en fonction d'éléments statiques issus du système d'informations de l'opérateur et des accords d'itinérance éventuels. Ce classement prend également en compte des informations dynamiques obtenues par apprentissage que le serveur de sélection d'accès 17 a stockées, pour chaque accès, dans la base de données locale 17A. Ces informations dynamiques comprennent, par exemple des caractéristiques observées des accès notamment concernant le taux de rejet des requêtes d'accès (la fréquence des coupures ainsi que la comparaison du débit négocié et du débit alloué). Cette base de données locale 17A comprend donc une liste de tous les accès déjà classés par ce serveur de sélection d'accès 17 pour un terminal d'utilisateur 1 précédent. Enfin, ce classement prend en compte le profil de l'utilisateur contenu dans la base de données 15. Le serveur de sélection d'accès 17 parcourt ensuite cette nouvelle liste classée d'identifiants d'accès et négocie en 51, tel que représenté sur les figures 2, 3 et 5, les ressources nécessaires avec chaque accès.

Le but de cette négociation est de trouver le premier accès 25 de la liste qui répond favorablement aux critères de qualité de service. Ainsi, pour chaque accès, le serveur de sélection d'accès 17 déduit, à partir de l'identifiant correspondant à cet accès, les données topologiques de l'accès lui permettant de négocier avec chaque accès. Les éléments interrogés sont soit des relais soit les passerelles 27 ou les noeuds 29 comme montré sur les figures 2 et 3. Dans le cas où l'accès est un accès de type 1-WLAN 7, le serveur de sélection d'accès 17 interroge la passerelle PDG 18 en 52 comme montré sur la figure 2.

Durant cette négociation de ressources en 51, le serveur de sélection d'accès s'assure que la qualité de service est garantie de bout en bout. L'échange entre le serveur de sélection d'accès 17 et la passerelle 27 ou le noeud 29 de l'accès s'effectue de la manière suivante. D'abord, le serveur de sélection d'accès 17 demande des ressources à la passerelle 27 ou au noeud 29. Ensuite, cette entité 27 ou 29 lui envoie une information sur la qualité de service disponible.

En cas d'échec en 53 de la négociation de ressources avec un accès donné qui n'est pas le dernier de la liste (test en 55) en raison notamment de qualité de service disponible insuffisante sur cet accès, le serveur de sélection d'accès 17 sélectionne en 57 l'identifiant suivant et effectue une négociation de ressources avec cet accès. Selon un mode de réalisation de l'invention, le serveur de sélection d'accès 17 établit une liste ordonnée classant les accès en fonction du résultat des négociations et met à jour ces données dynamiques sur les accès après chaque négociation de ressources. Cette liste est exploitée si aucune négociation ne donne entière satisfaction. En effet, si l'accès en cours est le dernier de la liste et que les négociations ont toutes échoué, le serveur de sélection d'accès 17 propose en 59 l'accès offrant le meilleur compromis en se basant sur le classement établi lors des négociations des ressources. A défaut, un message d'erreur est envoyé au terminal.

Si un accès disposant des ressources désirées est trouvé suite à l'étape de négociation des ressources 51, le serveur de sélection d'accès 17 effectue en 61 une réservation de ressources. Cette réservation se traduit par l'obtention en 63 d'un identifiant de la réservation de ressources. Cet identifiant est utilisé par le terminal 1 lorsqu'il se connecte à l'accès sélectionné et lui permet d'obtenir les ressources réservées. Cet identifiant de réservation de ressources peut être une clé ou un certificat ou un ticket...

Le serveur de sélection d'accès 17 renvoie ensuite en 65 au terminal 1 un message de succès contenant l'identifiant de l'accès sélectionné et l'identifiant de la réservation de ressources.

Le serveur de sélection d'accès 17 met à jour la liste des accès précédemment classés dans la base de données 17A à l'aide des résultats des négociations obtenus pour les accès figurant dans la liste ordonnée qu'il a établie pour le terminal 1.

A la réception des informations nécessaires pour la connexion à l'accès sélectionné par le serveur de sélection d'accès 17, le terminal 1 se connecte en 67 sur l'accès qui lui a été assigné et demande une autorisation pour accéder au service.

Selon un mode de réalisation de l'invention, une réauthentification rapide est demandée au terminal 1 lorsqu'il se connecte au nouvel accès sélectionné par le serveur de sélection d'accès 17, pour des raisons de sécurité. Cette réauthentification rapide peut utiliser, par exemple les protocoles de réauthentification rapide EAP-SIM (« EAP-SIM fast re-authentification »).

Suite à toutes les étapes décrites ci-dessus, le serveur de sélection d'accès 17 met à jour en 69 le classement de la liste des identifiants des accès.

Ainsi, l'invention fournit à l'utilisateur un accès lui offrant les meilleures conditions pour profiter des services auxquels il a souscrit. A défaut, elle lui fournit l'accès offrant le meilleur compromis en termes de qualité de service et de coût.

L'avantage du procédé d'accès de la présente invention est de permettre à l'utilisateur de se connecter via n'importe quel accès disponible. C'est le réseau hétérogène 3, par l'intermédiaire du serveur de sélection d'accès 17, qui lui assignera le meilleur accès pour le service souhaité. Il convient de noter que ce serveur de sélection d'accès peut être un équipement à part entière ou bien ses fonctionnalités peuvent être implémentées dans des équipements constants dans le réseau 3, comme par exemple le serveur d'authentification 13 ou bien la passerelle 33.

Par ailleurs, la réservation de ressources peut employer le protocole classique de réservation de ressources RSVP (« Resource ReSerVation Protocol »).

L'intérêt de cette réservation consiste à permettre la vérification de la disponibilité des ressources de bout en bout en fonction du profil de l'utilisateur. Ces ressources bien que réservées ne sont pas préemptées. La réservation permet aussi d'appliquer des règles de contrôle d'admission. En effet en fonction de la quantité de trafic actuelle et des prévisions de trafic, le réseau va accepter ou rejeter la requête.

Une fois que l'utilisateur est connecté au réseau, en fonction du service demandé par l'utilisateur, le réseau réévalue dynamiquement les ressources qu'il a allouées en temps réel à l'utilisateur en fonction du trafic, du profil de l'utilisateur et du réseau. Ces fonctionnalités sont à la charge de l'opérateur et ne sont pas couvertes par ce brevet.

## Revendications

1. Procédé d'accès à un service, via un réseau hétérogène (3) où plusieurs types d'accès (5, 7, 9, 11) sont disponibles, à partir d'un terminal (1) d'un utilisateur, tel qu'il comprend les étapes suivantes :
sur réception, depuis le terminal (1), d'une requête d'accès au service, d'une liste pré-classée d'identifiants d'accès disponibles pour le terminal (1) et de critères de classement, sélection par un serveur de sélection d'accès (17) d'un accès du réseau hétérogène (3) pour le terminal (1), ladite étape de sélection d'accès comprenant une étape de classement de la liste des identifiants des accès fournis par le terminal (1) sur la base des informations fournies par le terminal et d'informations concernant des caractéristiques de requêtes d'accès précédentes, une étape de réservation (61) de ressources auprès de l'accès sélectionné et une étape de mise à jour d'informations concernant les caractéristiques de requêtes d'accès précédentes dans une base de données locale (17A) associée au serveur de sélection d'accès, ladite étape de sélection comprenant en outre la négociation de ressources auprès d'un accès du réseau appartenant à la liste d'identifiants d'accès disponibles pour le terminal (1), et, en cas d'échec de la négociation avec ledit accès, la négociation avec un autre accès de la liste et, en cas d'échec de la négociation avec tous les accès de la liste, la sélection de l'accès conduisant au meilleur résultat de négociation et
envoi (65) par le serveur de sélection d'accès (17) d'un identifiant de l'accès sélectionné au terminal (1).

2. Procédé d'accès à un service selon la revendication 1, **caractérisé en ce que** l'étape d'envoi (65) comprend en outre l'envoi d'un identifiant de réservation de ressources au terminal (1).

3. Procédé d'accès à un service selon l'une des revendications 1 et 2, **caractérisé en ce que** l'étape de sélection comprend :
une étape de négociation de ressources avec un accès du réseau d'une liste d'identifiants d'accès visibles à partir du terminal (1);
en cas d'échec de la négociation avec ledit accès, elle effectue une négociation avec un autre accès de la liste; et
en cas d'échec de la négociation avec tous les accès de la liste, elle sélectionne l'accès conduisant au meilleur résultat de négociation.

4. Procédé selon la revendication 1, **caractérisé en ce que** lesdites informations comprennent des informations dynamiques obtenues par apprentissage.

5. Système d'accès à un service dans un réseau hétérogène (3), le système comprenant plusieurs types d'accès (5, 7, 9, 11) distincts, à partir d'un terminal (1) d'un utilisateur tel qu'il comprend :
-- un serveur de sélection d'accès (17) présent dans le réseau hétérogène (3) apte à recevoir, depuis le terminal (1), une requête d'accès au service du terminal (1), une liste pré-classée d'identifiants d'accès disponibles pour le terminal (1) et des critères de classement du terminal (1), comprenant :
a) des moyens de classement de la liste des identifiants des accès fournis par le terminal (1) sur la base des informations fournies par le terminal et d' informations concernant des caractéristiques de requêtes d'accès précédentes ;
b) des moyens de sélection d'un accès pour le terminal (1),
c) des moyens de réservation de ressources auprès de l'accès sélectionné;
d) des moyens d'envoi d'un identifiant de l'accès sélectionné au terminal (1) ; et
e) des moyens de mise à jour des informations concernant les caractéristiques de requêtes d'accès précédentes dans une base de données locale (17A) associable au serveur de sélection d'accès;
ledit système étant en outre tel que lesdits moyens de sélection comprennent des moyens de négociation de ressources auprès d'un accès du réseau appartenant à la liste d'identifiants d'accès disponibles pour le terminal (1);
en cas d'échec de la négociation avec ledit accès, lesdits moyens de négociation sont aptes à négocier avec un autre accès de la liste; et
en ce que, en cas d'échec de la négociation avec tous les accès de la liste, ils sont aptes à sélectionner l'accès conduisant au meilleur résultat de négociation.

6. Système d'accès selon la revendication 5, **caractérisé en ce que** les accès distincts (5, 7, 9, 11) sont des accès sans fil Wi-Fi (5, 7), WIMAX ou des accès de génération 2 ou 2,5 (9) ou 3 (11) de téléphonie mobile d'un ou de plusieurs opérateurs.

7. Serveur de sélection d'accès (17), tel qu'il comprend :
- des moyens de réception, depuis un terminal (1), d'une requête d'accès à un service d'un utilisateur, d'une liste pré-classée d'identifiants d'accès disponibles pour le terminal (1) et de critères de classement du terminal (1) ;
a) des moyens de classement de la liste des identifiants des accès fournis par le terminal (1) sur la base des informations fournies par le terminal et d'informations concernant des caractéristiques de requêtes d'accès précédentes ;
(b) des moyens de sélection d'un accès en réponse à la réception de la requête d'accès;
(c) des moyens de réservation de ressources auprès de l'accès sélectionné ;
(d) des moyens d'envoi d'un identifiant de l'accès sélectionné au terminal d'utilisateur (1); et
(e) des moyens de mise à jour d'informations concernant les caractéristiques de requêtes d'accès précédentes dans une base de données locale (17A) associable au serveur de sélection d'accès;
ledit serveur de sélection étant en outre tel que lesdits moyens de sélection comprennent des moyens de négociation de ressources auprès d'un accès du réseau appartenant à la liste d'identifiants d'accès disponibles pour le terminal (1);
en cas d'échec de la négociation avec ledit accès, lesdits moyens de négociation sont aptes à négocier avec un autre accès de la liste; et
en ce que, en cas d'échec de la négociation avec tous les accès de la liste, ils sont aptes à sélectionner l'accès conduisant au meilleur résultat de négociation.

8. Serveur de sélection d'accès (17) selon la revendication 7, **caractérisé en ce qu'**il comprend des moyens d'envoi d'un identifiant de réservation de ressources au terminal (1).

9. Produit programme d'ordinateur téléchargeable depuis un réseau de communication et/ou stocké sur un support lisible par ordinateur et/ou exécutable par un microprocesseur d'un serveur de sélection d'accès (17), **caractérisé en ce qu'**il comprend des instructions de code de programme pour l'exécution du procédé selon les revendications 1 à 4.

10. Programme d'ordinateur comportant des instructions de code, qui, lorsque ce programme est exécuté sur un serveur de sélection d'accès (17), permettent la mise en oeuvre des étapes du procédé d'accès consistant à :
- recevoir, depuis un terminal (1) d'un utilisateur, une requête d'accès à un service, une liste d'identifiants d'accès (5, 7, 9, 11) et du service et des critères de sélection et de classement ;
- négocier des ressources et classer la liste d'identifiants d'accès (5, 7, 9, 11) fournie par le terminal d'utilisateur (1) sur la base des critères de sélection et de classement fournis par ledit terminal (1) et par une base de données locale (17A) associée au serveur de sélection d'accès,
- sélectionner un accès en réponse à la réception de la requête d'accès;
- réserver des ressources auprès de l'accès sélectionné;
- mettre à jour des informations concernant les caractéristiques de requêtes d'accès précédentes dans la base de données locale (17A) associée au serveur de sélection d'accès, et
- envoyer un identifiant de l'accès sélectionné et un identifiant de réservation de ressources au terminal d'utilisateur (1) ;
tel en outre que négocier des ressources comprend la négociation de ressources auprès d'un accès du réseau appartenant à la liste d'identifiants d'accès disponibles pour le terminal (1), et, en cas d'échec de la négociation avec ledit accès, la négociation avec un autre accès de la liste et en ce que, en cas d'échec de la négociation avec tous les accès de la liste, sélectionner un accès comprend la sélection de l'accès conduisant au meilleur résultat de négociation.

## Claims

1. Method of access to a service, via a heterogeneous network (3) where several types of access (5, 7, 9, 11) are available, from a terminal (1) of a user, such that it comprises the following steps:
on receipt, from the terminal (1), of a request for access to the service, of a pre-ranked list of identifiers of access available for the terminal (1) and of ranking criteria, selection by an access selection server (17) of an access of the heterogeneous network (3) for the terminal (1), said access selection step comprising a step of ranking the list of identifiers of the accesses provided by the terminal (1) on the basis of the information provided by the terminal and of information relating to characteristics of previous access requests, a step (61) of reserving resources with the selected access, and a step of updating information relating to the characteristics of previous access requests in a local database (17A) associated with the access selection server, said selection step furthermore comprising the negotiation of resources with an access of the network belonging to the list of identifiers of access available for the terminal (1), and, in case of failure of the negotiation with said access, negotiation with another access of the list and, in case of failure of the negotiation with all the accesses of the list, selection of the access leading to the best negotiation result and
dispatching (65) by the access selection server (17) of an identifier of the selected access to the terminal (1).

2. Method of access to a service according to Claim 1, **characterized in that** the dispatching step (65) furthermore comprises the dispatching of a resources reservation identifier to the terminal (1).

3. Method of access to a service according to one of Claims 1 and 2, **characterized in that** the selection step comprises:
a step of negotiating resources with an access of the network of a list of identifiers of access visible from the terminal (1);
in case of failure of the negotiation with said access, it performs a negotiation with another access of the list; and
in case of failure of the negotiation with all the accesses of the list, it selects the access leading to the best negotiation result.

4. Method according to Claim 1, **characterized in that** said information comprises dynamic information obtained by learning.

5. System of access to a service in a heterogeneous network (3), the system comprising several types of distinct access (5, 7, 9, 11), from a terminal (1) of a user such that it comprises:
- an access selection server (17) present in the heterogeneous network (3) able to receive, from the terminal (1), a request for access to the service from the terminal (1), a pre-ranked list of identifiers of access available for the terminal (1) and criteria for ranking the terminal (1), comprising:
a) means for ranking the list of identifiers of the access provided by the terminal (1) on the basis of the information provided by the terminal and of information relating to characteristics of previous access requests;
b) means for selecting an access for the terminal (1);
c) means for reserving resources with the selected access;
d) means for dispatching an identifier of the selected access to the terminal (1); and
e) means for updating the information relating to the characteristics of previous access requests in a local database (17A) associable with the access selection server;
said system being furthermore such that said selection means comprise means for negotiating resources with an access of the network belonging to the list of identifiers of access available for the terminal (1);
in case of failure of the negotiation with said access, said negotiation means are able to negotiate with another access of the list; and
in that, in case of failure of the negotiation with all the accesses of the list, they are able to select the access leading to the best negotiation result.

6. Access system according to Claim 5, **characterized in that** the distinct accesses (5, 7, 9, 11) are Wi-Fi wireless accesses (5, 7), WIMAX or generation 2 or 2.5 (9) or 3 accesses (11) for mobile telephony of one or more operators.

7. Access selection server (17), such that it comprises:
- means for receiving, from a terminal (1), a request for access to a service from a user, a pre-ranked list of identifiers of access available for the terminal (1) and criteria for ranking the terminal (1);
a) means for ranking the list of identifiers of the accesses provided by the terminal (1) on the basis of the information provided by the terminal and of information relating to characteristics of previous access requests;
(b) means for selecting an access in response to the receipt of the access request;
(c) means for reserving resources with the selected access;
(d) means for dispatching an identifier of the selected access to the user terminal (1); and
(e) means for updating information relating to the characteristics of previous access requests in a local database (17A) associable with the access selection server;
said selection server being furthermore such that said selection means comprise means for negotiating resources with an access of the network belonging to the list of identifiers of access available for the terminal (1);
in case of failure of the negotiation with said access, said negotiation means are able to negotiate with another access of the list; and
in that, in case of failure of the negotiation with all the accesses of the list, they are able to select the access leading to the best negotiation result.

8. Access selection server (17) according to Claim 7, **characterized in that** it comprises means for dispatching a resources reservation identifier to the terminal (1).

9. Computer program product downloadable from a communication network and/or stored on a medium readable by computer and/or executable by a microprocessor of an access selection server (17), **characterized in that** it comprises program code instructions for the execution of the method according to Claims 1 to 4.

10. Computer program comprising code instructions, which, when this program is executed on an access selection server (17), allow the implementation of the steps of the access method consisting in:
- receiving, from a terminal (1) of a user, a request for access to a service, a list of identifiers of access (5, 7, 9, 11) and of the service and selection and ranking criteria;
- negotiating resources and ranking the list of identifiers of access (5, 7, 9, 11) provided by the user terminal (1) on the basis of the selection and ranking criteria provided by said terminal (1) and by a local database (17A) associated with the access selection server;
- selecting an access in response to the receipt of the access request;
- reserving resources with the selected access; and
- updating information relating to the characteristics of previous access requests in the local database (17A) associated with the access selection server; and
- dispatching an identifier of the selected access and a resources reservation identifier to the user terminal (1);
such moreover that negotiating resources comprises the negotiation of resources with an access of the network belonging to the list of identifiers of access available for the terminal (1), and, in case of failure of the negotiation with said access, negotiation with another access of the list and in that, in case of failure of the negotiation with all the accesses of the list, selecting an access comprises the selection of the access leading to the best negotiation result.

## Patentansprüche

1. Zugangsverfahren zu einem Dienst über ein heterogenes Netz (3), in dem mehrere Zugangsarten (5, 7, 9, 11) zur Verfügung stehen, ausgehend von einem Endgerät (1) eines Benutzers, derart, dass es die folgenden Schritte enthält:
bei Empfang, vom Endgerät (1), einer Dienstzugangsanforderung, einer vorsortierten Liste von für das Endgerät (1) zur Verfügung stehenden Zugangskennungen und von Sortierungskriterien, Auswahl durch einen Zugangsauswahlserver (17) eines Zugangs des heterogenen Netzes (3) für das Endgerät (1), wobei der Zugangsauswahlschritt einen Schritt des Sortierens der Liste der Kennungen der Zugänge, die vom Endgerät (1) geliefert werden, auf der Basis der vom Endgerät gelieferten Informationen und von Informationen betreffend Merkmale von vorhergehenden Zugangsanforderungen, einen Schritt der Reservierung (61) von Ressourcen beim ausgewählten Zugang und einen Schritt der Aktualisierung von Informationen betreffend die Merkmale von vorhergehenden Zugangsanforderungen in einer dem Zugangsauswahlserver zugeordneten lokalen Datenbank (17A) enthält, wobei der Auswahlschritt weiter die Verhandlung von Ressourcen bei einem Zugang des Netzes, der zur Liste von für das Endgerät (1) zur Verfügung stehenden Zugangskennungen gehört, und im Fall des Scheiterns der Verhandlung mit dem Zugang die Verhandlung mit einem anderen Zugang der Liste, und im Fall des Scheiterns der Verhandlung mit allen Zugängen der Liste die Auswahl des Zugangs enthält, der zum besten Verhandlungsergebnis führt, und
Senden (65) durch den Zugangsauswahlserver (17) einer Kennung des ausgewählten Zugangs an das Endgerät (1).

2. Zugangsverfahren zu einem Dienst nach Anspruch 1, **dadurch gekennzeichnet, dass** der Sendeschritt (65) außerdem das Senden einer Reservierungskennung von Ressourcen an das Endgerät (1) enthält.

3. Zugangsverfahren zu einem Dienst nach einem der Ansprüche 1 und 2, **dadurch gekennzeichnet, dass** der Auswahlschritt enthält:
einen Schritt der Verhandlung von Ressourcen mit einem Zugang des Netzes einer Liste von Zugangskennungen, die ausgehend von dem Endgerät (1) sichtbar sind;
im Fall des Scheiterns der Verhandlung mit dem Zugang führt er eine Verhandlung mit einem anderen Zugang der Liste aus; und
im Fall des Scheiterns der Verhandlung mit allen Zugängen der Liste wählt er den Zugang aus, der zum besten Verhandlungsergebnis führt.

4. Verfahren nach Anspruch 1, **dadurch gekennzeichnet, dass** die Informationen durch Lernen erhaltene dynamische Informationen enthalten.

5. Zugangssystem zu einem Dienst in einem heterogenen Netz (3), wobei das System mehrere unterschiedliche Zugangsarten (5, 7, 9, 11) ausgehend von einem Endgerät (1) eines Benutzers enthält, derart, dass es enthält:
- einen Zugangsauswahlserver (17), der in dem heterogenen Netz (3) vorhanden und fähig ist, vom Endgerät (1) eine Zugangsanforderung zum Dienst des Endgeräts (1), eine vorsortierte Liste von für das Endgerät (1) zur Verfügung stehenden Zugangskennungen und Sortierungskriterien des Endgeräts (1) zu empfangen, der enthält:
a)Einrichtungen zum Sortieren der Liste der Kennungen der Zugänge, die vom Endgerät (1) geliefert werden, auf der Basis der vom Endgerät gelieferten Informationen und von Informationen betreffend Merkmale von vorhergehenden Zugangsanforderungen;
b)Auswahleinrichtungen eines Zugangs für das Endgerät (1);
c)Reservierungseinrichtungen von Ressourcen beim ausgewählten Zugang;
d)Sendeeinrichtungen einer Kennung des ausgewählten Zugangs an das Endgerät (1); und
e)Aktualisierungseinrichtungen der Informationen betreffend die Merkmale von vorhergehenden Zugangsanforderungen in einer lokalen Datenbank (17A), die dem Zugangsauswahlserver zugeordnet werden kann;
wobei das System außerdem so ist, dass die Auswahleinrichtungen Einrichtungen zur Verhandlung von Ressourcen bei einem Zugang des Netzes enthalten, der zu der Liste von Zugangskennungen gehört, die für das Endgerät (1) zur Verfügung stehen;
im Fall des Scheiterns der Verhandlung mit dem Zugang die Verhandlungseinrichtungen fähig sind, mit einem anderen Zugang der Liste zu verhandeln; und
sie im Fall des Scheiterns der Verhandlung mit allen Zugängen der Liste fähig sind, den Zugang auszuwählen, der zum besten Verhandlungsergebnis führt.

6. Zugangssystem nach Anspruch 5, **dadurch gekennzeichnet, dass** die unterschiedlichen Zugänge (5, 7, 9, 11) drahtlose Wi-Fi-Zugänge (5, 7), WIMAX oder Zugänge der Generation 2 oder 2,5 (9) oder 3 (11) der Mobiltelefonie eines oder mehrerer Betreiber sind.

7. Zugangsauswahlserver (17), derart, dass er enthält:
- Einrichtungen zum Empfang ausgehend von einem Endgerät (1) einer Zugangsanforderung zu einem Dienst eines Benutzers, einer vorsortierten Liste von Zugangskennungen, die für das Endgerät (1) zur Verfügung stehen, und von Sortierungskriterien des Endgeräts (1);
(a)Einrichtungen zum Sortieren der Liste der Kennungen der Zugänge, die vom Endgerät (1) geliefert werden, auf der Basis der vom Endgerät gelieferten Informationen und von Informationen betreffend die Merkmale von vorhergehenden Zugangsanforderungen;
(b)Einrichtungen zur Auswahl eines Zugangs als Reaktion auf den Empfang der Zugangsanforderung;
(c)Einrichtungen zur Reservierung von Ressourcen beim ausgewählten Zugang;
(d)Einrichtungen zum Senden einer Kennung des ausgewählten Zugangs an das Benutzer-Endgerät (1); und
(e)Einrichtungen zur Aktualisierung von Informationen betreffend die Merkmale von vorhergehenden Zugangsanforderungen in einer lokalen Datenbank (17A), die dem Zugangsauswahlserver zugeordnet werden kann;
wobei der Auswahlserver außerdem so ist, dass die Auswahleinrichtungen Einrichtungen zur Verhandlung von Ressourcen bei einem Zugang des Netzes enthalten, der zu der Liste von Zugangskennungen gehört, die für das Endgerät (1) zur Verfügung stehen;
im Fall des Scheiterns der Verhandlung mit dem Zugang die Verhandlungseinrichtungen fähig sind, mit einem anderen Zugang der Liste zu verhandeln; und
dass sie im Fall eines Scheiterns der Verhandlung mit allen Zugängen der Liste fähig sind, den Zugang auszuwählen, der zum besten Verhandlungsergebnis führt.

8. Zugangsauswahlserver (17) nach Anspruch 7, **dadurch gekennzeichnet, dass** er Einrichtungen zum Senden einer Ressourcen-Reservierungskennung an das Endgerät (1) enthält.

9. Computerprogrammprodukt, das von einem Kommunikationsnetz heruntergeladen und/oder auf einem computerlesbaren Träger gespeichert und/oder von einem Mikroprozessor eines Zugangsauswahlservers (17) ausgeführt werden kann, **dadurch gekennzeichnet, dass** es Programmcodeanweisungen für die Ausführung des Verfahrens nach den Ansprüchen 1 bis 4 enthält.

10. Computerprogramm, das Codeanweisungen aufweist, die, wenn dieses Programm auf einem Zugangsauswahlserver (17) ausgeführt wird, die Durchführung der Schritte des Zugangsverfahrens erlauben, die darin bestehen:
- von einem Endgerät (1) eines Benutzers eine Zugangsanforderung zu einem Dienst, eine Liste von Kennungen eines Zugangs (5, 7, 9, 11) und des Diensts und Auswahl- und Sortierungskriterien zu empfangen;
- Ressourcen zu verhandeln und die Liste von Zugangskennungen (5, 7, 9, 11) zu sortieren, die vom Benutzer-Endgerät (1) geliefert wird, auf der Basis der Auswahl- und Sortierungskriterien, die von dem Endgerät (1) und von einer lokalen Datenbank (17A) geliefert werden, die dem Zugangsauswahlserver zugeordnet ist;
- einen Zugang als Reaktion auf den Empfang der Zugangsanforderung auszuwählen;
- Ressourcen bei dem ausgewählten Zugang zu reservieren;
- Informationen betreffend die Merkmale von vorhergehenden Zugangsanforderungen in der lokalen Datenbank (17A) zu aktualisieren, die dem Zugangsauswahlserver zugeordnet ist; und
- eine Kennung des ausgewählten Zugangs und eine Reservierungskennung von Ressourcen an das Benutzer-Endgerät (1) zu senden;
außerdem derart, dass das Verhandeln der Ressourcen die Verhandlung von Ressourcen bei einem Zugang des Netzes enthält, der zu der Liste von Zugangskennungen gehört, die für das Endgerät (1) zur Verfügung stehen, und im Fall des Scheiterns der Verhandlung mit dem Zugang die Verhandlung mit einem anderen Zugang der Liste, und dass im Fall des Scheiterns der Verhandlung mit allen Zugängen der Liste die Auswahl eines Zugangs die Auswahl des Zugangs enthält, der zum besten Verhandlungsergebnis führt.
